(19) **Europäisches Patentamt**
**European Patent Office**
**Office européen des brevets**

(11) **EP 1 613 852 B1**

(12) **EUROPÄISCHE PATENTSCHRIFT**

(45) Veröffentlichungstag und Bekanntmachung des Hinweises auf die Patenterteilung:
**10.12.2008 Patentblatt 2008/50**

(21) Anmeldenummer: **04719469.1**

(22) Anmeldetag: **11.03.2004**

(51) Int Cl.:
*F02D 41/22* (2006.01)      *F02D 41/10* (2006.01)

(86) Internationale Anmeldenummer:
**PCT/EP2004/050288**

(87) Internationale Veröffentlichungsnummer:
**WO 2004/088112 (14.10.2004 Gazette 2004/42)**

(54) **VERFAHREN ZUM BETREIBEN EINES VERBRENNUNGSMOTORS MIT EINER DREHMOMENT BERWACHUNG**

METHOD FOR OPERATING AN INTERNAL COMBUSTION ENGINE COMPRISING TORQUE MONITORING

PROCEDE PERMETTANT DE FAIRE FONCTIONNER UN MOTEUR A COMBUSTION INTERNE PAR SURVEILLANCE DU COUPLE

(84) Benannte Vertragsstaaten:
**DE FR GB IT**

(30) Priorität: **04.04.2003  DE 10315410**

(43) Veröffentlichungstag der Anmeldung:
**11.01.2006  Patentblatt 2006/02**

(73) Patentinhaber: **ROBERT BOSCH GMBH**
**70442 Stuttgart (DE)**

(72) Erfinder: **VON SCHWERTFUEHRER, Gerit**
**71642 Ludwigsburg (DE)**

(56) Entgegenhaltungen:
**EP-A- 0 768 455          WO-A-99/23379**
**DE-A- 19 722 253          DE-A- 19 739 564**
**DE-A- 19 836 845**

**Beschreibung**

Stand der Technik

Die Erfindung betrifft ein Verfahren zum Betreiben eines Verbrennungsmotors nach dem Oberbegriff des Anspruchs 1.

Die Erfindung betrifft ferner ein Steuergerät zum Steuern eines Verbrennungsmotors mit einem solchen Verfahren sowie eine Verwendung eines solchen Steuergerätes zum Steuern eines Verbrennungsmotors.

Das Auslösen der Fehlerreaktion soll verhindern, dass der Verbrennungsmotor abweichend vom Fahrerwunsch Drehmoment abgibt, was beispielsweise eine gewünschte Motorbremswirkung verringert oder sogar zu einem ungewollten Beschleunigen des Verbrennungsmotors und eines von dem Verbrennungsmotor angetriebenen Fahrzeugs führen kann.

Ein solches Verfahren, ein solches Steuergerät und eine solche Verwendung sind aus der DE 198 36 845A1 der Anmelderin bekannt.

Diese Schrift offenbart ein Verfahren und eine Vorrichtung zur Steuerung eines Verbrennungsmotors eines Kraftfahrzeugs, bei denen ein Istwert des Drehmoments des Verbrennungsmotors ermittelt wird, mit einem maximal zulässigen Wert verglichen wird und bei Überschreiten des maximal zulässigen Wertes Fehlerreaktionsmaßnahmen eingeleitet werden. Der maximal zulässige Wert wird dabei abhängig von einer zeitlichen Änderung der Drehzahl des Verbrennungsmotors gebildet. Die Bildung der drehmomentbestimmenden Signale zur Ansteuerung eines Leistungsstellgliedes findet dabei in einem Steuergerät auf einer ersten Programmebene statt, während die Bildung des zulässigen Drehmomentes im Rahmen eines Überwachungskonzeptes auf einer zweiten Programmebene stattfindet.

Eine Ermittlung des zulässigen Drehmomentes aus dem Fahrerwunsch ist insbesondere bei Verbrennungsmotoren mit Störungsreglern in Übergangsbetriebszuständen, insbesondere beim Übergang in einen Schiebebetrieb kritisch, da (zulässige) Eingriffe des Störungsreglers die Bildung des Ansteuersignals für ein Leistungsstellglied beeinflussen. Dem tatsächlichen Drehmoment, das aus dem Ansteuersignal resultiert, ist daher der Störungseingriff überlagert. Dieser kann bei dem herkömmlich gebildeten Wert für das zulässige Drehmoment zu Fehl-Erkennungen führen.

Zur Abhilfe sieht die DE 198 36 845 A1 vor, insbesondere dann, wenn in Folge einer Störgröße ein Drehzahlabfall stattfindet und der Leerlaufregler zur Kompensation das Drehmoment erhöht, einen Wert des zulässigen Drehmoments in Abhängigkeit von der Größe der zeitlichen Änderung der Motordrehzahl zu erhöhen. Beim Gegenstand der DE 198 36 845 A1 ist der Störungsregler ein Leerlaufregler.

Eine Verbrennungsmotorsteuerung mit Störungsregler ist ferner aus der DE 195 37 787 der Anmelderin bekannt. Der bekannte Störungsregler weist ein D2T2-Glied mit betriebspunktabhängigen Differential- und Verzögerungszeitkonstanten als Parameter auf. Das D2T2-Glied filtert die Drehzahl des Verbrennungsmotors. Sein Ausgangssignal wird additiv mit dem fahrerwunschabhängig erzeugten Ansteuersignal für das Leistungsstellglied verknüpft. Schwingungen des Antriebsstrangs, die als Ruckeln spürbar sind, überlagern sich der Drehzahl als Störung. Durch die Einkopplung des gefilterten Drehzahlsignals in das Ansteuersignal für das Leistungsstellglied wird die Ruckelschwingung des Antriebsstrangs gedämpft.

Durch die Einkopplung des gefilterten Drehzahlsignals in die Ansteuersignalbildung bildet sich die Ruckelschwingung im Ansteuersignal für das Leistungsstellglied und damit letztlich auch im zeitlichen Verlauf des tatsächlich vom Verbrennungsmotor erzeugten Drehmoments ab. Ruckelschwingungen werden insbesondere von Drehmomentänderungen angeregt, wie sie beispielsweise beim Übergang in den Schiebetrieb auftreten. Unter einem Schiebebetrieb eines Verbrennungsmotors wird im Folgenden ein Betrieb verstanden, bei dem der Verbrennungsmotor kein Drehmoment abgibt, sondern vielmehr selbst durch externe Einflüsse angetrieben wird. Ein Schiebebetrieb tritt beispielsweise beim Abbremsen oder bei einer Bergabfahrt eines Kraftfahrzeugs auf, wenn der Fahrer kein Drehmoment anfordert. Der Übergang in den Schiebebetrieb kann beispielsweise durch einen Fahrerwunschgeber, beispielsweise einen Fahrpedalgeber erfasst werden.

Der zur Ruckeldämpfung dienende Störungsregler greift insbesondere beim Übergang in den Schiebebetrieb in die Ansteuersignalbildung ein, so dass die bekannte, auf einer Auswertung des Fahrerwunsches basierende Drehmomentüberwachung nicht zuverlässig ist, bis der Störungsreglereingriff abgeklungen ist. In diesem Zusammenhang ist es per se bekannt, bei einem Übergang in den Schiebebetrieb etwa eine Sekunde abzuwarten, um den Störungsreglereingriff abklingen zu lassen. Erst danach wird die Drehmomentüberwachung freigegeben. Diese Drehmomentüberwachung ist daher nicht kontinuierlich. Damit ist der Nachteil verbunden, dass eine fehlerhafte Drehmomenterzeugung erst mit einer der Wartezeit entsprechenden Verzögerung entdeckt wird. Aus Sicherheitsgründen ist es jedoch wünschenswert, eine unerwünschte Erzeugung von Drehmoment möglichst verzögerungsfrei zu detektieren, um eine Fehlerreaktion auslösen zu können.

Aus der DE 197 39 564 A1 ist eine Ermittlung eines zulässigen Drehmoments unter Verwendung der tatsächlich ausgegebenen Leistungsstellgröße sowie einer Extrem werttubelle bekannt. Mit Blick auf den beschriebenen Standder Technik besteht die Aufgabe der Erfindung in der Angabe eines Verfahrens, das sowohl eine Ruckeldämpfung als auch eine kontinuierliche Momentenüberwachung ermöglicht und das dazu wenig Speicherplutz und Rechenzeit benötigt.

Diese Aufgabe wird mit einem Verfahren mit den Merkmalen des Anspruchs 1 gelöst.

Ferner wird diese Aufgabe durch ein Steuergerät gelöst, das ein solches Verfahren oder eines der weiter unten dargestellten Ausgestaltungen des Verfahrens steuert. Die Aufgabe wird ferner durch eine Verwendung eines solchen Steuergerätes zur Ruckeldämpfung und Momentenüberwachung gelöst, wobei als Leistungsstellglied wenigstens eine der folgenden Komponenten verwendet wird: Einspritzventilanordnung, Drosselklappenanordnung, variable Einlassventilsteuerung, Zündvorrichtung.

Die Berechnungen im Steuergerät erfolgen im Allgemeinen je nach physikalischem Zusammenhang in Drehmomenteinheit (Fahrerwunschmoment, Drehmomentbegrenzung, ...) oder Mengeneinheit bzw. Ansteuersignaleinheit (Rauchbegrenzung, Mengenausgleichsregelung). Die Verbindung erfolgt über ein Motorwirkungsgradkennfeld. Die in der vorliegenden Anmeldung für Drehmomente offenbarten Überlegungen sind daher zu entsprechenden Betrachtungen zu Mengen (Kraftstoffmengen) äquivalent.

Vorteile der Erfindung

Durch diese Merkmale wird die Aufgabe der Erfindung vollkommen gelöst. Als Folge wird die Sicherheit der Verbrennungsmotorsteuerung durch eine gegebenenfalls schneller erfolgende Fehlerreaktion erhöht.

Das D2T2-Glied des Störungsreglers als sich als besonders geeignet für eine Ruckeldämpfung erwiesen. Es ist ein Vorteil der Erfindung, dass sie mit einem solchen Glied

Dadurch, dass bei der Bildung des Wertes für das maximal zulässige Drehmoment der Schätzwert für den Drehmomentbeitrag des Störungsreglereingriffs durch Nachbilden des D2T2-Gliedes mit festen Parametern gebildet wird, erfolgt die Lösung der Aufgabe Resourcenschonend. Im Gegensatz zu der Möglichkeit, den kompletten Störungsregler mit betriebspunktabhängigen Zeitkonstanten funktional identisch nachzubilden, benötigt die Erfindung weniger Speicherplatz und Rechenzeit (Programmlaufzeit) im Steuergerät.

Bevorzugt ist auch, dass bei der Bildung der Maßzahl für das tatsächliche Drehmoment die tatsächlich vom Leistungsstellglied ausgegebene Stellgröße berücksichtigt wird.

Durch diese Ausgestaltung kann die vereinfachte Nachbildung gewissermaßen mit Schranken versehen werden, die durch den realen Störungsregler gesetzt werden.

Weiter ist bevorzugt, dass die tatsächlich vom Leistungsstellglied ausgegebene Stellgröße durch eine Extremalauswahl im Vergleich zu einer nachgebildeten Stellgröße berücksichtigt wird.

Diese Ausgestaltung bewirkt, dass bei der vereinfachten Nachbildung entstehende Extremwerte bei der Weiterverarbeitung ausgeschlossen werden können.

Bevorzugt ist ferner, dass das Ergebnis der Extremalauswahl nach dem vorhergehenden Absatz mit einem festen Wert durch eine weitere Extremalauswahl verglichen wird.

Diese Ausgestaltung liefert den weiteren Vorteil, dass die Weiterverarbeitung beispielsweise auf positive Werte beschränkt werden kann, um das zulässige Drehmoment nicht zu sehr zu verringern. Dadurch wird eine sonst möglicherweise auftretende Überempfindlichkeit der Fehlererkennung verhindert.

Weiter ist bevorzugt, dass der Schätzwert für den Drehmomentbeitrag des Störungsreglereingriffs durch Zugriff auf eine mit der zweiten Ableitung der Drehzahl des Verbrennungsmotors nach der Zeit adressierte Kennlinie gebildet wird.

Diese Ausgestaltung stellt eine besonders einfache und Resourcen-schonende Alternative zu den oben genannten Ausgestaltungen dar.

Bevorzugt ist auch, dass bei einem Übergang in einen Schiebebetrieb des Verbrennungsmotors eine Fehlerreaktion ohne Wartezeit auslösbar ist.

Dadurch wird die Geschwindigkeit, mit der eine beim Betrieb des Verbrennungsmotors aktive Drehmomentüberwachung eine Fehlerreaktion auslösen kann, minimiert.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Zeichnungen

Ausführungsbeispiele der Erfindung sind in den Zeichnungen dargestellt und werden in der nachfolgenden Beschreibung näher erläutert. Es zeigen:

Fig. 1    schematisch einen Verbrennungsmotor mit Stellgliedern, Sensorik und einem Steuergerät;

Fig.2    ein Steuergerät mit Sensorik und einem Stellglied in Funktionsblockdarstellung;

Fig. 3    zeitliche Verläufe von Signalen im Steuergerät;

Fig. 4    ein Ausführungsbeispiel der Erfindung als Funktionsblockdarstellung; und

Fig. 5    ein alternatives Ausführungsbeispiel.

Beschreibung der Ausführungsbeispiele

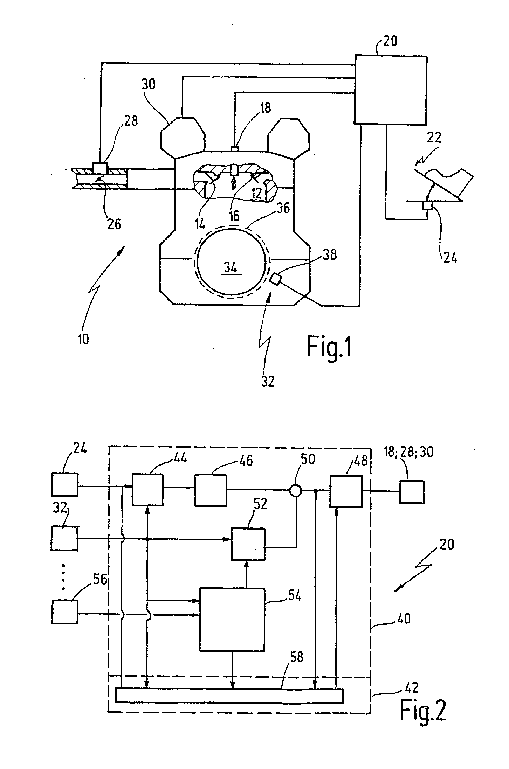

Die Ziffer 10 in der Figur 1 bezeichnet die Gesamtansicht eines stark schematisiert dargestellten Verbrennungsmotors mit wenigstens einem Brennraum 12. Eine Füllung des Brennraums 12 wird über ein Einlassventil 14 und ein Auslassventil 16 ausgewechselt. Zu einer Luftfüllung des Brennraums 12 wird über ein Einspritzventil 18 Kraftstoff zugemessen, wobei der Zeitpunkt der Zumessung und die zugemessene Menge von einem Steuergerät 20 gesteuert werden. Dabei wird das Einspritzventil 18 als Leistungsstellglied benutzt. Die zugemessene Menge bestimmt ganz wesentlich das vom Verbrennungsmotor 10 erzeugte Drehmoment. Die Ansteuerung des Leistungsstellgliedes erfolgt unter anderem in Abhängigkeit von einem Fahrerwunsch, der über ein Fahrpedal 22 von einem Fahrpedalgeber 24 erfasst und an das Steuergerät 20 weitergeleitet wird.

Eine solche Art der Leistungssteuerung ist für einen Dieselmotor typisch. Eine vergleichbare Leistungssteuerung über die Menge des zugemessenen Kraftstoffs erfolgt auch bei einem Ottomotor mit Direkteinspritzung im Betrieb mit beschichteter Brennraumfüllung. Im Unterschied zum Dieselmotor, bei dem die Einspritzung die Verbrennung auslöst, erfolgt beim Ottomotor eine Fremdzündung der Brennraumfüllung, beispielsweise durch eine Zündkerze.

Bei einem Ottomotor mit Direkteinspritzung, der im Homogenbetrieb, also mit homogener Gemischverteilung im Brennraum 12, betrieben wird, erfolgt die Einstellung des gewünschten Drehmomentes in Abhängigkeit vom Fahrerwunsch über die Menge der Füllung des Brennraums 12 (Qualitätsregelung). Dies gilt analog auch für einen Verbrennungsmotor mit Saugrohreinspritzung.

In diesen Fällen kann die Menge der Brennraumfüllung über eine Drosselklappe 26, die von einem Drosselklappensteller 28 in gesteuerter Weise vom Steuergerät 20 betätigt wird, eingestellt werden. Die Drosselklappe 26 mit dem Drosselklappensteller 28 dient dann als Leistungsstellglied. Alternativ kann die Menge der Füllung des Brennraums 12 auch über eine variable Ansteuerung des Einlassventils 14 durch einen Einlassventilsteller 30, der ebenfalls vom Steuergerät 20 angesteuert wird, gesteuert werden. Der Verbrennungsmotor 10 weist ferner eine Drehzahlsensorik 32 auf, die beispielsweise aus einem Geberrad 34 mit ferromagnetischen Markierungen 36 und einem Induktivsensor 38 bestehen kann.

Wie in Figur 2 dargestellt, weist das Steuergerät 20 eine erste Ebene 40 und eine zweite Ebene 42 auf, wobei diese Ebenen 40, 42 in der Funktionsblockdarstellung der Figur 2 Programmebenen eines Motorsteuerungsprogramms entsprechen. In der ersten Ebene 40 läuft das eigentliche Steuerungsprogramm ab, in dem aus Signalen einer eingangsseitigen Sensorik 24, 32 und 56 Stellgrößen zur ausgangsseitigen Steuerung von Stellgliedern, bspw. von Leistungsstellgliedern 18, 28 und 30 geformt werden. Die zweite Ebene 42 dient zur Überwachung der Motorsteuerung. Dazu bekommt sie ebenfalls Signale der eingangsseitigen Sensorik 24, 32, 56 zugeführt. Daraus, und ggf. aus weiteren, von der ersten Ebene erhaltenen Signalen, formt die zweite Ebene Signale zur Überwachung der ersten Ebene. Im Fehlerfall kann sie in die erste Ebene eingreifen und dort eine Fehlerreaktion erzeugen.

In der ersten Ebene wird zunächst aus den Signalen des Fahrpedalgebers 24 und der Drehzahlsensorik 32 ein Sollwert für das vom Verbrennungsmotor 10 zu erzeugende Drehmoment und/oder aber ein entsprechender Basiswert zur Stellgliedansteuerung erzeugt. Dieses Signal wird anschließend in einem Führungsformer 46 gefiltert um bspw. schlagartige Änderungen der Fahrpedalstellung (des Fahrerwunsches) vor der Stellgliedansteuerung zu glätten. Der Führungsformer 46 kann als Tiefpass, bspw. als PT1-Glied realisiert sein. Diese Glättung erfolgt, um Lastwechselschläge, die Schwingungen des Triebstrangs erzeugen könnten, zu dämpfen. Zur Dämpfung solcher Triebstrangschwingungen (Ruckeldämpfung) wird das Signal der Drehzahlsensorik 32 einem Störungsregler 52 zugeführt, der daraus ein Korrektursignal bildet, das mit dem geglätteten Basiswert aus dem Block 46 in Block 50 verknüpft wird. Der Störungsregler arbeitet als phasenkorrigierendes/phasenverschiebendes Glied und gibt daher ein Signal aus, das gegenüber dem Signal des Führungsformers phasenverschoben ist. Die Verknüpfung kann sowohl multiplikativ als auch additiv erfolgen. Das Ausgangssignal der Verknüpfung 50 wird in einem Block 48, zu endgültigen Ansteuersignalen für wenigstens eines der Stellglieder 18, 28 oder 30 umgeformt und an diese Stellglieder ausgegeben.

Der Störungsregler 52 ist bevorzugt als D2T2-Filter realisiert. Seine von der kompletten Frequenzvariablen s abhängige Übertragungsfunktion lautet dann:

$$\text{Ausgangssignal(s)/Drehzahl(s)} = k \times s^2/(1+txs)^2,$$

wobei k die Verstärkung ist (die Konstante des D-Anteils) und T die Zeitkonstante des Verzögerungsanteils ist. Die Variable s ist die Frequenz. Durch die D2T2-Filterung (Phasenverschiebung) des Drehzahlsignals erhält man eine das Ruckeln des Triebstrangs dämpfende Ansteuersignalkomponente, die in der bereits beschriebenen Weise in der Verknüpfung 50 mit dem gefilterten Basiswert für die Stellgliedansteuerung verknüpft wird.

Da die Amplitude und die Frequenz der Ruckelschwingungen bei Kraftfahrzeugen stark betriebspunktabhängig sind, sind mit festen Filterkonstanten K, T nicht für alle Betriebspunkte befriedigende Ergebnisse zu erwarten. Erfahrungsgemäß wird die Ruckelschwingung von der jeweils vorliegenden Übersetzungsstufe im Getriebe und von der Motordrehzahl stark beeinflusst. Der Störungsregler 52 wird daher mit Hilfe einer Parameterauswahl im Block 54 mit betriebspunktabhängigen Parametern K, T gespeist. Zur Auswahl betriebspunktabhängiger Parameter wird dem Block 54 zumindest ein Signal der Drehzahlsensorik 32 und sein weiteres Signal einer Sensorik 56 zugeführt, aus der sich die gerade eingelegte Übersetzungsstufe bestimmen lässt. Das Signal der Sensorik 56 kann bspw. ein Fahrgeschwindigkeitssignal v sein, so dass sich aus v und Drehzahl n die Übersetzung und damit die Übersetzungsstufe bestimmen lässt.

Zur Überprüfung und Überwachung des in der ersten Ebene gebildeten Ansteuersignals für die Stellglieder 18, 28 und 30 wird in der zweiten Ebene 42, im Überwachungsblock 58 ein Wert für ein höchstens zulässiges Ansteuersignal gebildet. Der im Überwachungsblock 58 gebildete Wert für ein zulässiges Ansteuersignal entspricht einem maximal zulässigen Drehmoment. Dieser Wert wird im Block 58 aus Signalen des Fahrerwunschgebers 24, der Drehzahlsensorik 32 und ggf. aus Steuersignalen der ersten Ebene, bspw. Werten von bestimmten Parametern K, T für den Störungsregler 52, die von der Parameterauswahl 54 bereitgestellt werden. Das in der ersten Ebene 40 gebildete Ausgangssignal der Verknüpfung 50 entspricht einer Maßzahl für das tatsächliche Drehmoment des Verbrennungsmotors. Dieser Wert wird dem Überwachungsblock 58 zugeführt, so dass im Block 58 Werte für das höchstens zulässige Drehmoment und für das tatsächliche Drehmoment vorliegen. Ergibt ein Vergleich der tatsächlichen Ansteuerdauer (oder des tatsächlichen Drehmoments) mit einem Wert für ein maximal zulässiges Ansteuersignal (oder einem maximal zulässigen Drehmoment), dass das tatsächliche Ansteuersignal (Drehmoment) zu groß wird, löst die Überwachung 58 eine Fehlerreaktion aus, indem sie bspw. die endgültige Ansteuersignalformung im Block 48 verhindert, sperrt oder verändert.

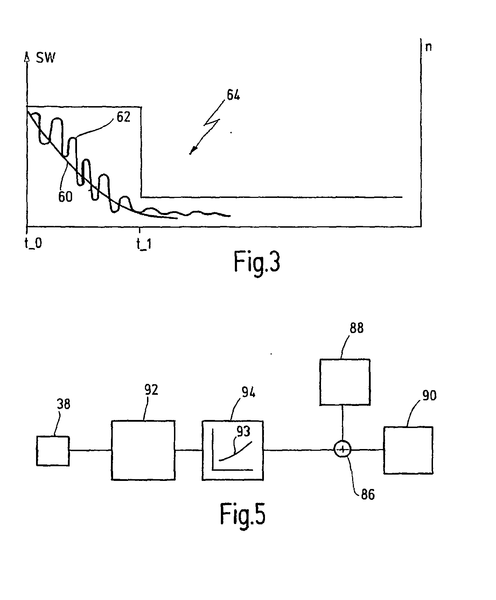

Figur 3 zeigt zeitliche Verläufe von Signalen im Steuergerät 20 zum Veranschaulichen des technischen Hintergrundes der Erfindung. Dabei wird zum Zeitpunkt t_0 vom Fahrpedalgeber 24 ein Übergang in den Schiebebetrieb ausgelöst. Dadurch ändert sich das Ausgangssignal der Sollwertsteuerung 44 in Figur 1 mehr oder weniger schlagartig. Diese schlagartige Änderung wird vom Führungsformer 46 geglättet, der das in Figur 3 dargestellte, monoton fallende Ausgangssignal 60 ausgibt. Der Lastwechsel regt Triebstrangschwingungen an, die sich im Signal der Drehzahlsensorik 32 abbilden. Über den Störungsregler 52 wird das gefilterte Drehzahlsignal der Ansteuersignalbildung durch die Verknüpfung 50 gewissermaßen gegengekoppelt. Letztlich bildet sich damit die Ruckelschwingung in der Bildung des Ansteuersignals für das Stellglied 18, 28 und 30 ab. Dabei ist der Phasenbezug zwischen der Schwingung im Ansteuersignal und der eigentlichen Ruckelschwingung durch die D2T2-Filterung im Störungsregler 52 so, dass die Ruckelschwingung gedämpft wird. Die oszillierende Kurve 62 in Figur 3 zeigt gewissermaßen das Ausgangssignal der Verknüpfung 50, also das mit einem Eingriff des Störungsreglers 52 überlagerte Ausgangssignal des Führungsformers 46.

Durch die Schwingung im Verlauf 62 könnten Überwachungsschwellenwerte, die einen festen Offset zum Signal 60 aufweisen, überschritten werden. Aus diesem Grunde findet nach dem Stand der Technik beim Auftreten der Schwingungen im Signal 62 eine Drehmomentüberwachung nicht statt. Wie aus Figur 3 ersichtlich ist, klingt die Schwingung im Signal 62 mit zunehmender Zeit ab, so dass etwa ab dem Zeitpunkt t_1, wieder ein Ansteuersignalverlauf vorliegt, der der bekannten Überwachung zugänglich ist. Bei der bekannten Überwachung werden diese Zusammenhänge dadurch berücksichtigt, dass die Drehmomentüberwachung, insbesondere die sicherheitskritische Schubüberwachung (Drehmomentüberwachung im Schiebebetrieb) in der Zeitspanne zwischen t_0 und t_1 deaktiviert wird. Diese Zeitspanne des Abklingens der Schwingung im Ansteuersignal hat eine Länge von größenordnungsmäßig einer Sekunde.

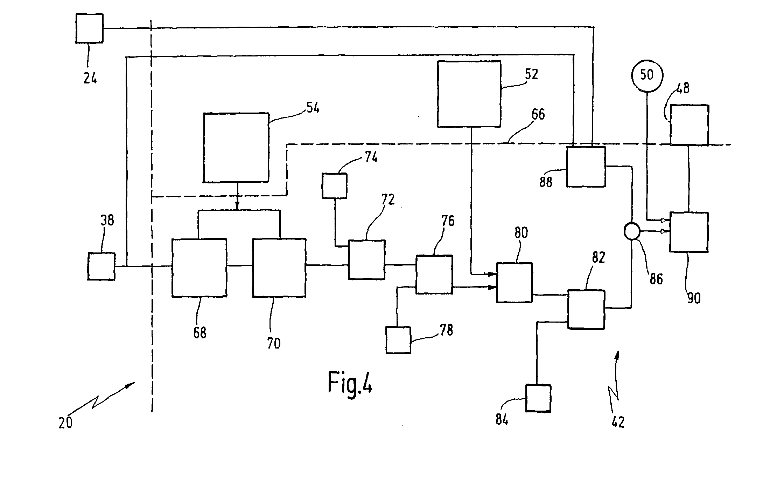

Mit Blick auf Figur 4 wird im Folgenden erläutert, wie diese unerwünschte Wartezeit im Rahmen eines Ausführungsbeispiels der Erfindung vermieden werden kann. Figur 4 zeigt im Wesentlichen die Funktionsweise der zweiten Ebene 42 des Steuergeräts 20, bzw. dessen Programmstruktur, mit mehr Details. Darüber hinaus zeigt Figur 4, wie die erste Ebene 40 und die zweite Ebene 42 in Wechselwirkung miteinander stehen. Das Signal des Induktivsensors 38 der Drehzahlsensorik 32 wird im Steuergerät 20 einer Serienschaltung von zwei DT1-Gliedern 68 und 70 zugeführt. Den beiden DT1-Gliedern 68, 70 in Ebene 2 werden von der Parameterauswahl 54 in Figur 1 Extremalwerte der Verstärkungskonstante K und der Zeitkonstante T des D2T2-Gliedes aus der ersten Ebene zugeführt. Dabei stellen die Extremalwerte jeweils Werte dar, die zu extremen Ansteuersignalen und damit Drehmomenten führen. Mit anderen Worten, in der Ebene 2 wird das D2T2-Glied aus der Ebene 1 in vereinfachter Form nachgebildet, wobei sich die Vereinfachung auf die Verwendung fester, zu Extremalwerten des Drehmoments führender Parameter K, T bezieht.

Das durch die Blöcke 68 und 70 nachgebildete Ausgangssignal des D2T2-Gliedes aus Ebene 1 wird anschließend durch vier aufeinanderfolgende Extremalwertauswahlen weiter verarbeitet. Dabei wird das Ausgangssignal des Blocks 70 in einer ersten Extremalauswahl des Blocks 72 auf einen betragsmäßig plausiblen oberen Wert beschränkt, der vom Block 74 bereitgestellt wird. Anschließend erfolgt in der zweiten Exremalwertauswahl des Blocks 76 eine betragsmäßige Beschränkung auf einen unteren plausiblen Grenzwert. Dieser Beschränkung auf einen unteren Grenzwert ist eine weitere Extremalwertauswahl im Block 80 nachgeschaltet. Dem Block 80 wird der in der ersten Ebene durch den Störungsregler 52 gebildete Eingriff und das Ausgangssignal des Blocks 76 zugeführt. Block 80 wählt aus diesen beiden Werten den betragsmäßig kleineren Wert aus. Anschließend erfolgt eine weitere Extremalwertauswahl in einem Block 82, in dem der Ausgangswert des Blocks 80 mit einem Festwert verglichen wird, der von dem Block 84 bereitgestellt wird. Dieser Festwert ist vorzugsweise 0. Durch diesen Festwert 0 lassen sich drehmomentsteigernde und drehmomentsenkende Eingriffe des Störungsreglers 52 unterscheiden. Da man im Rahmen der Überwachung nur an der Detektion von drehmomentsteigernden Einflüssen interessiert ist, kann man durch die Extremalwertauswahl im Block 82 gewissermaßen die für die Überwachung nicht interessanten Beiträge des Störungsreglers 52 ausgrenzen.

Der durch diese vier Extremalwertauswahlen 72, 76, 80 und 82 gebildete Wert wird anschließend in der Verknüpfung 86 als Schätzwert für den Drehmomentbeitrag des Eingriffs des Störungsreglers 52 mit einem ersten Nährungswert für das maximal zulässige Drehmoment verknüpft, der vom Block 88 bereitgestellt wird. Block 88 in Ebene 2 empfängt Signale des Fahrpedalgebers 24 und des Induktivsensors 38 und formt mit diesen Eingangssignalen das Verhalten der Sollwertsteuerung 44 und des Führungsformers 46 aus der Ebene 1 nach. Mit anderen Worten: diesem ersten Näherungswert wird im Block 86 ein Schätzwert für den Drehmomentbeitrag des Eingriffs des Störungsreglers 52 überlagert. Das Ergebnis der Überlagerung wird im Block 90 mit einer Maßzahl für das tatsächliche Drehmoment des Verbrennungsmotors aus der Ebene 1 verglichen. Diese Maßzahl kann bspw. der Wert sein, der in der Ebene 1 von der Verknüpfung 50 bereitgestellt wird. Überschreitet die Maßzahl für das tatsächliche Drehmoment im Block 90 den Wert für ein maximal zulässiges Drehmoment, löst Block 90 über eine Verbindung zur Ansteuersignalbildung 48 eine Fehlerreaktion aus, bspw. ein Beschränken oder ein Sperren der Ansteuersignalbildung.

Zur weiteren Veranschaulichung wird für das Folgende davon ausgegangen, dass die Verknüpfung 86 eine Subtraktion darstellt, in der das Ausgangssignal des Blocks 82 vom ersten Näherungswert, der vom Block 88 ausgegeben wird, subtrahiert wird. In willkürlichen Einheiten gemessen sei das Ausgangssignal des Blocks 70 bspw. -2. In der Ebene 1 würde ein solcher negativer Ausgangswert des Störungsreglers 52 zu einer Reduktion des Ansteuersignals für Leistungsstellglieder 18, 28 oder 30 führen. Bei der getroffenen Vorzeichenkonvention entspricht die Extremalwertauswahl im Block 72 einer Maximalwertauswahl. Dieser Maximalwertauswahl wird als obere plausible Grenze bspw. der Wert -3 zugeführt. Entsprechend wählt Block 72 aus den beiden Größen -3 und -2 den Wert -2 aus und gibt diesen an Block 76 weiter. Block 76 entspricht bei der gewählten Vorzeichenkonvention einer Minimalwertauswahl.

Als plausibler Wert für eine untere Grenze des Störungsreglereingriffs stellt Block 78 bspw. den Wert -1 für Block 76 bereit. Block 76 wählt aus den anstehenden Werten -2 und -1 das Minimum -1 aus und gibt diesen an den Block 80 weiter, der bei dieser Vorzeichenkonvention als Maximalwertauswahl realisiert ist.

Der Störungsregler 52 aus Figur 1 soll bspw. den Wert -1 an Block 80 liefern. Block 80 wählt aus den anstehenden Werten -1 und -2 das Maximum -1 aus. Auf diese Weise wird der Schätzwert für den Eingriff des Störungsreglers 52, wie er als Schätzwert in der Ebene 2 gebildet wird, auf den tatsächlichen Wert beschränkt, wie er in der Ebene 1 gebildet wird. Dadurch wird die Empfindlichkeit der Überwachung gesteigert. Anschließend erfolgt in Block 82 eine weitere Minimalwertauswahl. Block 82 wird dazu von einem Block 84 ein Festwert, bevorzugt der Wert 0, bereitgestellt. Block 82 wählt daher aus den anstehenden Werten -1 und 0 den Wert -1 aus. Dieser Wert -1 wird in der Verknüpfung 86 subtrahiert und damit betragsmäßig addiert. Der betragsmäßig addierte Wert stellt damit einen Offset dar, der dem Näherungswert aus dem Block 88 überlagert wird, um einen Schwellenwert für den Block 90 bereitzustellen.

Figur 5 zeigt eine weiter vereinfachte Alternative zur Abschätzung des Eingriffsmoments des Störungsreglers 52. Dazu wird das Ausgangssignal des Induktivsensors 38 der Drehzahlsensorik 32 im Block 92 zweimal nach der Zeit differenziert. Die so gebildete zweite Zeitableitung der Drehzahl dient zur Adressierung einer Kennlinie 93 im Block 94, die das maximale Störungsreglereingriffsmoment liefert, um welches das zulässige Moment der Ebene 2 erhöht wird. Entsprechend wird das vom Block 94 ausgegebene maximale Störungsregler-Eingriffsmoment in der Verknüpfung 86 zu einem ersten Näherungswert addiert, der, wie vorstehend beschrieben, in der Ebene 2 auf der Basis von Signalen der Drehzahlsensorik 32 und des Fahrerwunsches gebildet wurde. Die Summe wird anschließend an einem Block 90 übergeben, der die gleiche Funktion hat wie der Block 90 in der Figur 4.

**Patentansprüche**

1.  Verfahren zum Betreiben eines Verbrennungsmotors (10) mit den Schritten:

Einstellen der Drehmomentabgabe des Verbrennungsmotors (10) über ein Leistungsstellglied (18; 28; 30) in Abhängigkeit vom Signal eines Fahrerwunschgebers (24);

Bilden eines Wertes für ein maximal zulässiges Drehmoment des Verbrennungsmotors (10);

Bilden einer Maßzahl für das tatsächliche Drehmoment des Verbrennungsmotors (10) und Vergleichen der Maßzahl mit dem Wert; und

Auslösen einer Fehlerreaktion, wenn das tatsächliche Drehmoment das maximal zulässige Drehmoment überschreitet; wobei

einem Ansteuersignal des Leistungsstellgliedes (18; 28; 30) ein Eingriff eines Störungsreglers (52) überlagert wird;

der Wert für das maximal zulässige Drehmoment aus einer Verknüpfung eines ersten Näherungswertes mit einem Schätzwert für den Drehmomentbeitrag des Eingriffs des Störungsreglers (52) gebildet wird, und wobei der erste Näherungswert in Abhängigkeit von dem Signal des Fahrerwunschgebers (24) gebildet wird, **dadurch gekennzeichnet, dass**

bei der Bildung des Wertes für das maximal zulässige Drehmoment der Schätzwert für den Drehmomentbeitrag des Eingriffs des Störungsreglers (52) durch Nachbilden eines D2T2-Gliedes des Störungsreglers mit festen Parametern gebildet wird.

2. Verfahren nach wenigstens einem der Ansprüche 1 oder 2, **dadurch gekennzeichnet, dass** bei der Bildung des Wertes für das zulässige Drehmoment die tatsächlich vom Leistungsstellglied (18; 28; 30) ausgegebene Stellgröße berücksichtigt wird.

3. Verfahren nach Anspruch 2, **dadurch gekennzeichnet, dass** die tatsächlich vom Leistungsstellglied (18; 28; 30) ausgegebene Stellgröße durch eine Extremalwertauswahl (80) im Vergleich zu einer nachgebildeten Stellgröße berücksichtigt wird.

4. Verfahren nach Anspruch 3, **dadurch gekennzeichnet, dass** das Ergebnis der Extremalwertauswahl (80) nach Anspruch 5 mit einem festen Wert durch eine Extremalwertauswahl (82) verglichen wird.

5. Verfahren nach Anspruch 1, **dadurch gekennzeichnet, dass** der Schätzwert für den Drehmomentbeitrag des Eingriffs des Störungsreglers (52) durch Zugriff auf eine mit der zweiten Ableitung der Drehzahl des Verbrennungsmotors (10) nach der Zeit adressierte Kennlinie gebildet wird.

6. Steuergerät (20) zum Steuern eines Verbrennungsmotors (10), **dadurch gekennzeichnet, dass** es wenigstens eines der Verfahren nach den Ansprüchen 1 bis 5 steuert.

7. Verwendung eines Steuergerätes (20) zum Steuern eines Verbrennungsmotors (10), **dadurch gekennzeichnet, dass** es wenigstens eines der Verfahren nach den Ansprüchen 1 bis 5 steuert, wobei als Leistungsstellglied (18; 28; 30) wenigstens eine der folgenden Komponenten verwendet wird: Anordnung von Einspritzventilen (18), Drosselklappensteller (28) in Verbindung mit Drosselklappe (26), variable Einlassventilsteuerung (14, 30), Zündvorrichtung.

## Claims

1. Method for operating an internal combustion engine (10) comprising the steps:

setting of the torque output of the internal combustion engine (10) by means of a power actuator (18; 28; 30) as a function of the signal of a driver's request signal transmitter (24);

formation of a value for a maximum permissible torque of the internal combustion engine (10);

formation of a measure for the actual torque of the internal combustion engine (10) and comparison of the measure with the value; and

triggering of a fault reaction if the actual torque exceeds the maximum permissible torque; wherein

an intervention by a fault controller (52) is superimposed on an actuation signal of the power actuator (18; 28; 30);

the value for the maximum permissible torque is formed from a logic combination of a first approximate value with an estimated value for the torque contribution of the intervention by the fault controller (52), and wherein the first approximate value is formed as a function of the signal of the driver's request signal transmitter (24), **characterized in that**, during the formation of the value for the maximum permissible torque, the estimated value for the torque contribution of the intervention by the fault controller (52) is evolved by simulating a D2T2 element of the fault controller with fixed parameters.

2. Method according to at least one of Claims 1 or 2, **characterized in that**, during the formation of the value for the permissible torque, the manipulated variable which is actually output by the power actuator (18; 28; 30) is taken into account.

3. Method according to Claim 2, **characterized in that** the manipulated variable which is actually output by the power actuator (18; 28; 30) is taken into account in comparison with a simulated manipulated variable by means of an extremal value selection (80).

4. Method according to Claim 3, **characterized in that** the result of the extremal value selection (80) according to Claim 3 is compared with a fixed value by means of an extremal value selection (82).

5. Method according to Claim 1, **characterized in that** the estimated value for the torque contribution of the intervention by the fault controller (52) is formed by accessing a characteristic curve which is addressed with the second derivative of the engine speed of the internal combustion engine (10) over time.

6. Control unit (20) for controlling an internal combustion engine (10), **characterized in that** it controls at least one of the methods according to Claims 1 to 5.

7. Use of a control unit (20) for controlling an internal combustion engine (10), **characterized in that** it controls at least one of the methods according to Claims 1 to 5, wherein at least one of the following components is used as power actuator (18; 28; 30): arrangement of injection valves (18), throttle valve actuator (28) in conjunction with throttle valve (26), variable inlet valve controller (14, 30), ignition device.

**Revendications**

1. Procédé de gestion d'un moteur à combustion interne (10) comprenant les étapes suivantes :

- réglage du couple fourni par le moteur à combustion interne (10) par l'intermédiaire d'un organe de réglage de puissance (18; 28; 30) en fonction du signal d'un capteur détectant le souhait du conducteur (24),
- formation d'une valeur pour un couple maximum autorisé pour le moteur à combustion interne (10),
- formation d'une mesure du couple effectif du moteur à combustion interne (10) et comparaison de cette mesure à la valeur, et
- déclenchement d'une réaction d'erreur si le couple effectif dépasse le couple maximum autorisé, et
- on combine au signal de commande de l'organe de réglage de puissance (18; 28; 30), une action d'un régulateur d'incident (52),
- on forme la valeur du couple maximum autorisé par la combinaison d'une première valeur approchée et d'une valeur évaluée de la participation au couple de l'action du régulateur d'incident (52), et
- on forme la première valeur d'approximation en fonction du signal fourni par le capteur détectant le souhait du conducteur (24),

**caractérisé en ce que**
lorsqu'on forme la valeur du couple maximum autorisé, on forme la valeur évaluée de la participation au couple de l'action du régulateur d'incident (52) en imitant un élément D2T2 du régulateur d'incident avec des paramètres fixes.

2. Procédé selon la revendication 1,
**caractérisé en ce qu'**
en formant la valeur du couple autorisé, on tient compte de la grandeur de réglage émise effectivement par l'organe de réglage de puissance (18; 28; 30).

3. Procédé selon la revendication 2,
**caractérisé en ce qu'**
on tient compte de la grandeur de réglage émise effectivement par l'organe de réglage de puissance (18; 28; 30) par une sélection de valeurs extrêmes (80) pour la comparaison avec une grandeur de réglage copiée.

4. Procédé selon la revendication 3,

**caractérisé en ce qu'**
on compare le résultat de la sélection de la valeur extrême (80) selon la revendication 5 à une valeur fixe par une sélection de valeur extrême (82).

5. Procédé selon la revendication 1,
**caractérisé en ce qu'**
on forme la valeur évaluée de la participation au couple de l'action du régulateur d'incident (52) par une action sur une courbe caractéristique adressée en fonction du temps par la dérivée seconde de la vitesse de rotation du moteur à combustion interne (10).

6. Appareil de commande (20) pour commander un moteur à combustion interne (10),
**caractérisé par**
au moins l'un des procédés selon les revendications 1 à 5.

7. Application d'un appareil de commande (20) pour commander un moteur à combustion interne (10),
**caractérisée en ce qu'**
au moins l'un des procédés selon les revendications 1 à 5, assure la commande et l'organe de réglage de puissance (18; 28; 30) est au moins l'un des composants suivants : système des soupapes d'injection (18), actionneur de volet d'étranglement (28) en combinaison avec le volet d'étranglement (26), commande variable des soupapes d'admission (14, 30), système d'allumage.

Fig.1

Fig.2

SW

n

64

62

60

t_0                    t_1

Fig.3

88

38          92          94                    90

93

86

Fig.5

Fig.4

**EP 1 613 852 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19836845 A1
- DE 19537787

- DE 19739564 A1